# FASCICULE DE BREVET EUROPEEN

(11) **EP 0 818 921 B1**
(45) Date de publication et mention de la délivrance du brevet: **12.11.2008**
(21) Numéro de dépôt: 97401661.0
(22) Date de dépôt: 10.07.1997
(51) Int. Cl.: H04N 3/15

(54) **Dispositif d'intégration séquentielle et de lecture séquentielle pour une mosaique de détecteurs électro-magnétiques**
Vorrichtung zur aufeinanderfolgenden Integration und Auslesung für ein elektromagnetisches Detektormosaik
Device for sequential integration and sequential readout of a mosaic of electro-magnetic detectors

(30) Priorité: 12.07.1996 FR 9608744
(43) Date de publication de la demande: 14.01.1998
(73) Titulaire: COMMISSARIAT A L'ENERGIE ATOMIQUE, 75015 Paris (FR)
(72) Inventeur: Cluzel, Jacques, 38120 Saint-Egreve (FR); Nicolas, Pierre, 38120 Saint-Egreve (FR)
(74) Mandataire: Poulin, Gérard

(56) Documents cités:
- EP-A- 0 143 047
- EP-A- 0 148 654
- EP-A- 0 553 406
- EP-A- 0 655 860
- US-A- 5 128 534
- US-A- 5 323 186
- PATENT ABSTRACTS OF JAPAN vol. 014, no. 139 (E-0903), 15 mars 1990 & JP 02 003973 A (NEC CORP), 9 janvier 1990,

## Description

### Domaine technique

La présente invention concerne un dispositif de lecture pour une mosaïque de détecteurs et un système de détection équipé d'un tel dispositif.

L'invention s'applique en particulier aux systèmes de détection équipés d'une pluralité de détecteurs agencés en lignes et en colonnes sous une forme matricielle ou plus simplement à des barrettes de détecteurs à une dimension.

Par ailleurs, le dispositif de l'invention peut être utilisé, non seulement pour des détecteurs de lumière visible, mais pour tout type de détecteur de rayonnement électromagnétique, y compris les détecteurs sensibles aux rayonnements de longueurs d'onde infrarouges et aux rayons X.

Enfin, le dispositif de l'invention convient pour les détecteurs de type quantique et pour les détecteurs de type bolométrique.

### Etat de la technique antérieure

Un détecteur de rayonnement électromagnétique délivre un signal sous la forme d'une tension ou d'un courant représentatif du rayonnement qu'il reçoit.

Pour conditionner le signal délivré par les détecteurs, un circuit de lecture, généralement doté d'un point mémoire, est associé à chaque détecteur. Ce point mémoire est utilisé pour, d'une part établir une information moyenne, et d'autre part la stocker jusqu'à la lecture proprement dite de celle-ci.

L'information moyenne est généralement obtenue par une intégration, soit du courant propre du détecteur soit d'un courant représentatif du signal délivré par le détecteur, dans une capacité dite d'intégration.

Le circuit de lecture assure également le multiplexage des informations issues de chaque point mémoire vers un (ou des) étage(s) de sortie qui délivre un signal vidéo susceptible d'être traduit pour former une image ou effectuer un traitement spatio-temporel des informations délivrées par les détecteurs.

Pour des composants de type linéaire - autrement dit les composants dans lesquels, les détecteurs sont implantés à un pas régulier dans une seule direction - les images sont obtenues par un balayage du composant ou de la scène observée. Pour les composants avec une mosaïque de détecteurs, ceux-ci sont généralement implantés selon un motif matriciel. Le balayage des détecteurs, est facultatif. Ce balayage peut servir à augmenter le format de l'image, à faire du TDI (Time Delay Integration) et à augmenter le rapport signal sur bruit.

Un facteur de qualité important d'un composant de détection est le rapport entre le temps mis pour établir l'information moyenne du signal délivré par un détecteur individuel, généralement appelé temps d'intégration, et le temps pour sortir les informations de tous les détecteurs, généralement appelé temps de lecture. Un rapport proche de 1 signifie que l'information potentielle du composant est utilisée à son maximum.

De façon générale les dispositifs de lecture associés à un ensemble de détecteurs comportent une pluralité de mémoires, c'est-à-dire une pluralité de capacités d'intégration.

En effet, plus le nombre de détecteurs est grand, plus il est difficile d'obtenir un rapport entre le temps d'intégration sur le temps de lecture qui soit voisin de 1. L'accroissement de la taille des composants (systèmes de détection) est généralement lié à une réduction du pas des détecteurs qui les composent (dimension du motif élémentaire) et de ce fait à une réduction du condensateur d'intégration. Ceci conduit à des limitations en temps d'intégration et à un rapport temps d'intégration sur temps de lecture qui se réduit. Lorsque le nombre de détecteurs est grand, le temps de lecture des informations devient tel que les charges délivrées par chaque détecteur pendant ce temps sont trop nombreuses pour être stockées dans une mémoire élémentaire associé à chaque détecteur.

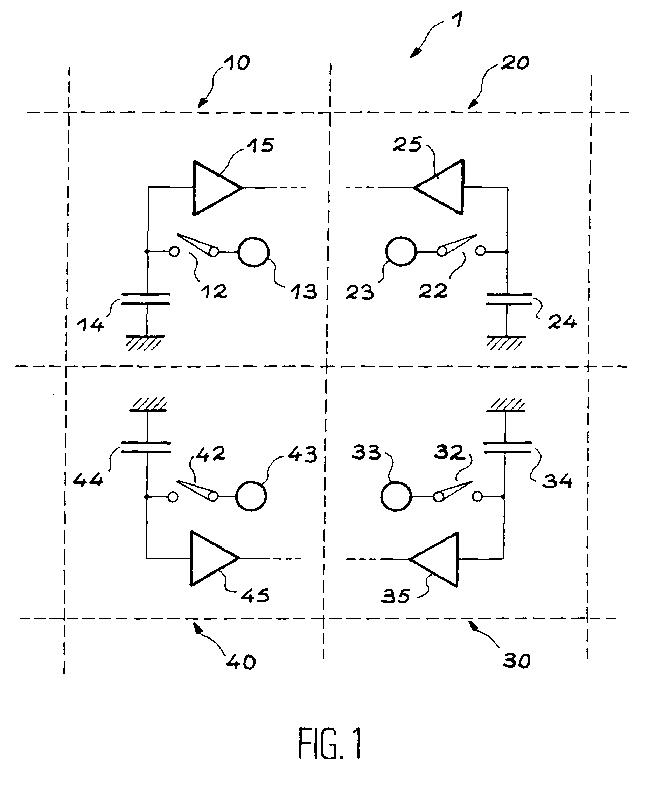

La figure 1 annexée illustre de façon schématique un dispositif de lecture à mémoires multiples, de type connu, dans lequel une capacité d'intégration, formant mémoire, est associée à chaque détecteur. Un tel dispositif de lecture est adapté en particulier pour un détecteur formé d'une mosaïque de détecteurs individuels juxtaposés.

Sur la figure 1, le dispositif de lecture partiellement représenté, est désigné par la référence générale 1. Il comporte une pluralité de cellules de circuit de lecture 10, 20, 30, 40, comprenant chacune un circuit de lecture relié par l'intermédiaire d'un interrupteur 12, 22, 32, 42 à un plot de connexion 13, 23, 33, 43.

Les plots de connexion 13, 23, 33, 43 sont respectivement reliés électriquement à des détecteurs d'un circuit de détection non visible sur la figure, associé au dispositif de lecture.

Chaque circuit de lecture comporte un condensateur d'intégration, respectivement 14, 24, 34 et 44, et un amplificateur suiveur repéré respectivement par les références 15, 25, 35, 45. L'amplificateur suiveur de chaque circuit de lecture est relié à un circuit de sortie non représenté.

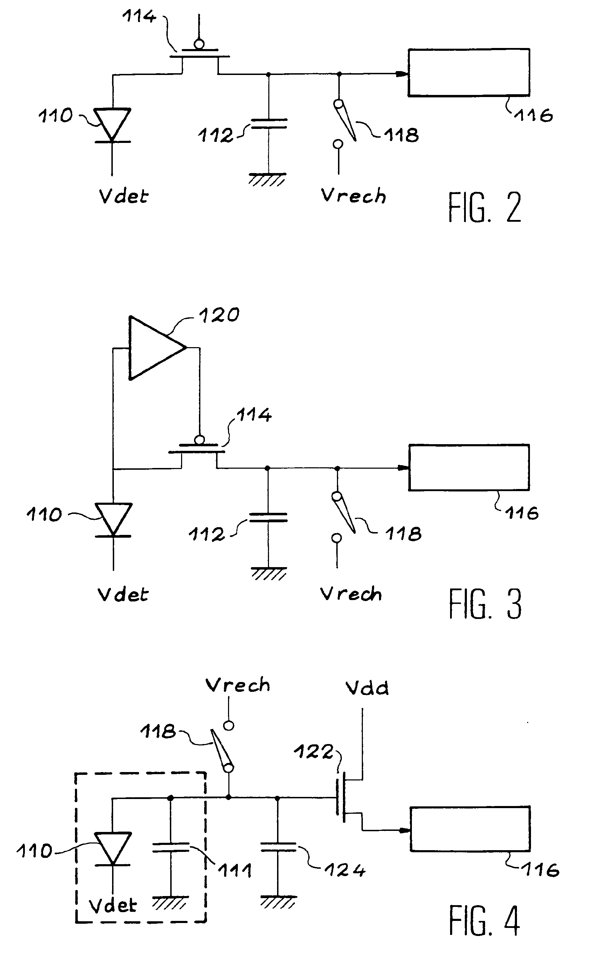

Le schéma de câblage des circuits de lecture de la figure 1 ne constitue qu'un cas particulier parmi une pluralité d'autres possibilités. Les figures 2 à 6 donnent à titre d'exemple d'autres possibilités connues de réalisation des circuits de lecture.

Pour simplifier la description de ces figures, des éléments identiques ou similaires des différentes figures sont repérés avec les mêmes références.

Sur les figures 2 à 6, les détecteurs photovoltaïques et photoconducteurs sont du type P-N. Ils sont représentés symboliquement par une diode de détection et désignés par la référence 110. L'anode de la diode de détection 110 est reliée à une source de tension fixe désignée par V_{det}. Sa cathode est reliée à un circuit de lecture.

Sur la figure 2, la diode de détection 110 est reliée à un condensateur d'intégration 112, formant mémoire, par un transistor MOS 114 qui utilisé en régime de commutation comme un interrupteur. Le transistor 114 a également une fonction de polarisation de la diode de détection 110 et une fonction d'adaptation d'impédance entre le détecteur et le circuit de lecture. Une tension de polarisation indiquée par Vₚₒₗ est appliquée sur la grille du transistor 110.

Le condensateur intégration 112 dont le rôle est d'effectuer une moyenne du signal reçu et de stocker l'information relative à ce signal, est lui-même relié à un multiplexeur ou un amplificateur représenté schématiquement avec la référence 116.

Un interrupteur 118 permet de relier le condensateur d'intégration 112 à un potentiel de recharge désigné par V_{rech} et permettant d'initialiser la charge du condensateur après chaque lecture. Ceci correspond à l'effacement de la mémoire que constitue le condensateur 112.

Le circuit de la figure 2 peut être amélioré en ajoutant un amplificateur de contre-réaction 120 reliant la cathode de la diode de détection 110 à la grille du transistor 114. Cette variante est illustrée à la figure 3. L'amplificateur de contre-réaction 120 assure une meilleure adaptation d'impédance et un meilleur rendement d'injection, c'est-à-dire un courant intégré plus important par rapport à la variation de courant détecté de la diode 110 (lorsque la diode 110 subit une augmentation de son courant de détection).

Le schéma de la figure 4 diffère essentiellement de celui des figures 2 et 3 par le fait que le détecteur est équipé d'un condensateur propre noté 111. La diode de détection 110 intègre sur son propre condensateur et le signal est lu par un dispositif suiveur de tension. Ce dispositif est construit autour d'un transistor 122 dont la source est reliée à une tension fixe V_{dd}, dont le drain est relié au multiplexeur 116 et dont la grille est reliée à la cathode de la diode de détection 110. Un condensateur de grille 124 est monté en parallèle avec condensateur 111. L'interrupteur de recharge 118 permet la remise à zéro de l'intégration.

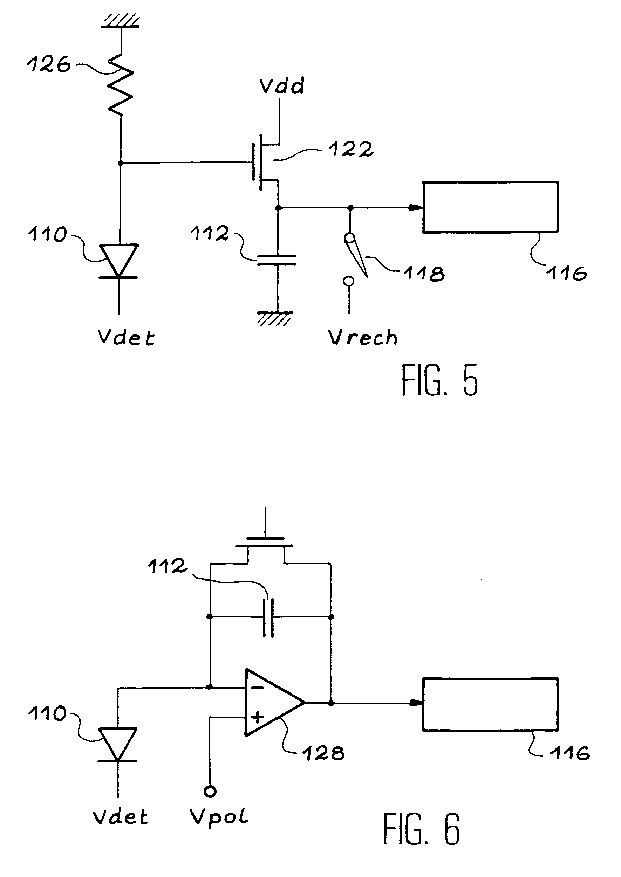

Le circuit de lecture de la figure 5 est un circuit de lecture par modulation de grille. Il constitue une amélioration par rapport au circuit de lecture de la figure 4.

La cathode de la diode de détection 110 est reliée à la masse par l'intermédiaire d'une résistance de charge 126 et est reliée à la grille d'un transistor 122. Ainsi, la tension aux bornes du détecteur pilote le courant délivré par le transistor 122 pour charger un condensateur d'intégration 112.

L'interrupteur d'initialisation 118 et le multiplexeur sont reliés au condensateur 112 d'intégration comme pour les figures 2 et 3.

Une autre possibilité de réalisation du circuit de détection est illustrée par la figure 6. Selon le schéma de la figure 6, la diode de détection 110 est reliée au multiplexeur 116 par l'intermédiaire d'un amplificateur opérationnel 128.

La cathode de la diode de détection est reliée à l'entrée inverseuse de l'amplificateur et une tension de polarisation désignée par Vₚₒₗ est appliquée à l'entrée non inverseuse. Un condensateur d'intégration 112 est connecté entre l'entrée inverseuse et la sortie de l'amplificateur opérationnel. Un transistor formant interrupteur relie les bornes du condensateur 112.

Quelle que soit la réalisation particulière du circuit de lecture, conformément aux figures 2 à 6, le dispositif de lecture illustré par la figure 1 comporte un condensateur associé à chaque détecteur. Dans ce type de dispositif de lecture, l'intégration est du type dit "snap shot". Tous les interrupteurs 12, 22, 32, 42 du dispositif de lecture sont simultanément fermés et le signal d'information délivré par chaque détecteur est simultanément collecté dans respectivement chacun des condensateurs 14, 24, 34, 44. Les charges sont accumulées pendant un temps dit temps d'intégration, puis les interrupteurs sont ouverts. La charge accumulée dans chaque condensateur représente un signal moyen du détecteur correspondant et peut alors être lue pendant un temps de lecture.

Dans un tel dispositif de lecture il est possible d'obtenir un rapport entre le temps d'intégration et le temps de lecture voisin de 1.

Toutefois, le composant de la figure 1 présente un certain nombre de désavantages liés à la réalisation du dispositif de lecture et à la façon dont l'information est traitée.

Pour des composants équipés d'une mosaïque de détecteurs avec un très grand nombre de détecteurs agencés selon un schéma matriciel, le pas entre les détecteurs individuels est nécessairement réduit. Le pas est compris comme la distance séparant les milieux de deux détecteurs consécutifs.

Or, comme chaque détecteur est associé individuellement à une cellule de circuit de lecture 10, 20, 30, 40, le pas des cellules doit être sensiblement le même que celui des détecteurs.

Pour les composants à grand nombre de détecteurs, évoqués ci-dessus, la réduction du pas entraîne également la réduction de la surface disponible pour le condensateur d'intégration.

Par conséquent, la capacité d'accumulation des charges et la possibilité de disposer d'une information moyennée sur un temps important sont réduites.

Cette limitation se traduit par une réduction de la sensibilité des composants qui est pourtant une de leurs caractéristiques primordiales.

Une solution partielle à ce problème consiste, pour des composants dont les détecteurs sont agencés selon un plan matriciel, à déporter les condensateurs de stockage aux extrémités de lignes ou de colonnes de circuits de détection. La contrainte du pas des détecteurs est alors limitée à une seule direction.

Cependant dans un tel arrangement chaque condensateur d'intégration mémorise les informations de tous les détecteurs d'une ligne ou d'une colonne à des instants différents.

Ceci correspond à un balayage électronique de l'intégration qui permet d'accroître la charge intégrée à chaque image mais la cohérence temporelle des informations est alors perdue. Le déport des sites de stockage en bout de ligne ou de colonne pour un composant matriciel n'est intéressant que lorsque le temps d'intégration sans déport du site de stockage est de l'ordre de grandeur de quelques temps de lecture d'une ligne ou d'une colonne. Cette possibilité de déport du site de stockage est limitée à des applications particulières dans lesquelles les détecteurs ont un temps d'intégration faible. Ceci est le cas, par exemple, lorsque les détecteurs délivrent un courant relativement important par rapport à la capacité de stockage qui leur est associée.

Un deuxième problème posé par les dispositifs de lecture tient à un phénomène dit de "diaphotie".

La "diaphotie" désigne un phénomène optique comparable à la diaphonie. Ce phénomène se traduit notamment par un mélange des informations entre les détecteurs plus proches voisins. En d'autres termes, un signal produit par un photon atteignant une zone sensible proche de la périphérie d'un détecteur individuel peut être mesuré par le détecteur plus proche.

Pour éviter le phénomène, il est nécessaire d'espacer physiquement les détecteurs et ainsi réduire le taux de remplissage de la mosaïque de détecteurs. Ceci revient à réduire la proportion de surface sensible par rapport à la surface non sensible.

En revanche, un taux de remplissage plus faible se traduit par une diminution de la probabilité de la détection d'un rayonnement et crée des problèmes de sous-échantillonnage spatial. On entend par sous-échantillonnage spatial le non-respect de la condition de Nyquist : un signal modulé spatialement à une fréquence plus grande que le pas des détecteurs est replié et est donc observé à une fréquence moindre. De façon pratique, le sous-échantillonnage provoque un repliement du spectre de détection (aliasing), et l'interprétation visuelle des détails de haute fréquence spatiale de l'image devient fausse.

Ces problèmes sont exposés plus en détail dans les documents (1) et (2) dont les références sont indiquées à la fin de la présente description.

Afin de compenser les limitations dues au sous-échantillonnage, il est possible d'effectuer un microbalayage de l'image formée sur la mosaïque de détecteurs. Cette solution est suggérée par le document (2). Cependant, la mise en oeuvre pratique du microbalayage est complexe et coûteuse.

La demande de brevet EP 0 148 654 décrit un dispositif de lecture pour un ensemble de détecteurs de rayonnement selon le préambule de la revendication 1.

La demande de brevet EP 0 655 860 décrit un capteur CCD avec un ensemble de détecteurs de rayonnement agencés en mosaïque dans lequel la résolution spatiale du capteur dépend des dimensions latérales du groupe de détecteurs dont la grille est portée à une tension positive.

Finalement, dans la plupart des composants de détection connus, comportant un grand nombre de détecteurs, il est nécessaire de trouver un compromis acceptable entre les contraintes liées au taux de remplissage de la mosaïque de détecteurs et celles liées au phénomène de diaphotie.

Pour remédier à ces difficultés et limitations la présente invention a pour but de proposer un dispositif de lecture autorisant un taux maximum de remplissage de la mosaïque de détecteurs, c'est-à-dire un dispositif de lecture compatible avec un composant de détection pour lequel pratiquement toute la surface du pas, voire une surface supérieure au pas, est une surface sensible.

Un autre but de l'invention est de proposer un dispositif de lecture qui non seulement permette d'éviter les problèmes de sous-échantillonnage, mais qui autorise un sur-échantillonnage.

Un autre but encore de l'invention est de proposer un dispositif de lecture permettant d'éviter le phénomène de "diaphotie".

L'invention a également pour but de proposer un dispositif de lecture pour lequel le rapport entre le temps d'intégration du signal des détecteurs et le temps de lecture est amélioré par rapport aux dispositifs de l'art antérieur.

Un but est donc de proposer un dispositif permettant d'obtenir une information moyenne sur un temps important, c'est-à-dire avec de bonnes possibilités de stockage du signal.

Enfin, un but de l'invention est de fournir un système de détection équipé du dispositif de lecture proposé.

### Exposé de l'invention

Pour atteindre les buts mentionnés, l'invention a plus précisément pour objet un dispositif de lecture prévu pour un ensemble de détecteurs de rayonnement agencés en une mosaïque de détecteurs, et comprenant une pluralité de condensateurs, dits condensateurs d'intégration, reliés chacun à un circuit de lecture apte à lire pendant un temps dit de lecture, une charge, accumulée dans le condensateur d'intégration pendant un temps dit d'intégration. Conformément à l'invention, chaque condensateur d'intégration est respectivement associé à un sous-ensemble de plusieurs détecteurs de la mosaïque, le dispositif de lecture comprenant en outre une pluralité d'interrupteurs commandables pour relier successivement chaque détecteur de chaque sous-ensemble de détecteurs respectivement au condensateur d'intégration associé audit sous-ensemble de détecteurs, afin de collecter un signal de détection dudit détecteur, et le dispositif de lecture comprenant des moyens pour commander la fermeture, respectivement l'ouverture, des interrupteurs associés à chaque sous-ensemble de détecteurs selon un ordre séquentiel excluant l'intégration simultanée et la lecture simultanée du signal de détection de détecteurs plus proches voisins de la mosaïque de détecteurs.

On considère au sens de la présente invention que deux détecteurs sont plus proches voisins lorsqu'ils présentent respectivement un bord commun, un bord adjacent ou un sommet d'angle commun.

Comme la fermeture séquentielle des interrupteurs est prévue pour exclure l'intégration et la lecture simultanée du signal de détection de détecteurs voisins, les problèmes de diaphotie sont évités. En effet, lorsqu'un détecteur est relié au circuit de lecture et au condensateur d'intégration qui lui est associé, la zone de détection à laquelle correspond le signal détecté est parfaitement définie : par exemple, lorsque le détecteur est une diode cette zone correspond à une zone de charge d'espace et une zone de diffusion du détecteur considéré. Dans le cas où le détecteur est une diode, la zone de diffusion est définie comme une zone entourant la jonction P-N formée dans le détecteur et dans laquelle la probabilité de détection d'un rayonnement incident est supérieur à une valeur prédéterminée fixée généralement à l/e (∼0,37). Les détecteurs voisins étant hors circuit et par conséquent non polarisés, il n'y a pas de recouvrement des zones de détection.

Aussi, il est inutile de prévoir un espacement physique entre les détecteurs voisins de la mosaïque de détecteurs. L'espacement physique entre les détecteurs voisins n'est plus limité que par l'isolement électrique à assurer entre les détecteurs.

Comme cela apparaîtra plus loin dans la description, il est possible de réaliser un sur-échantillonnage en réalisant des détecteurs dont la surface de la zone de diffusion et par conséquent la surface de détection est plus grande que le pas des détecteurs sur la mosaïque. On entend par sur-échantillonnage le fait qu'une information lue sur un détecteur donné est également lue, au moins en partie, sur un détecteur voisin.

La mise en commun d'un condensateur d'intégration pour plusieurs détecteurs, permet de dédier une surface du circuit plus importante à la fonction d'intégration, c'est-à-dire au condensateur d'intégration. La capacité du condensateur d'intégration commun est donc plus importante que celle qu'aurait un condensateur qui serait associé individuellement à chaque détecteur. La sensibilité d'un composant de détection étant directement lié au temps d'intégration et donc à la quantité de charges stockables, le dispositif de l'invention permet d'accroître de façon significative la performance première du composant.

Au niveau du circuit de lecture, cette mise en commun du site d'intégration peut être utilisé pour dédier une partie de la surface disponible, à l'implantation de fonctions de traitement qui ne pouvaient l'être dans l'art antérieur. Il s'agit par exemple de fonctions telles que des fonctions d'ébasage (skimming) anti-éblouissement (antiblooming), ou d'adaptation d'impédance.

Selon un aspect particulier de l'invention, le circuit de lecture étant apte à lire le signal pendant un temps dit de lecture et les interrupteurs étant fermés pour collecter le signal de détection pendant un temps dit d'intégration, le nombre de détecteurs de chaque sous-ensemble de détecteurs peut être choisi de préférence de telle sorte que la somme des temps de lecture des détecteurs de chaque sous-ensemble soit augmenté (par exemple de l'ordre de grandeur du temps d'intégration).

On peut noter également que, dans ce cas, le rapport signal sur bruit est augmenté. Ce rapport augmente sensiblement comme la racine carrée du nombre de détecteurs de chaque sous-ensemble.

On souhaite que le temps d'intégration soit le plus proche possible du temps image et donc améliorer le rapport du temps d'intégration sur le temps image. Le temps image correspond au temps global pris par la lecture et l'intégration. Lorsque ces deux opérations sont successives dans le temps, le temps image est la somme du temps de lecture et du temps d'intégration.

Dans une réalisation particulière du circuit de lecture, il est possible de lui adjoindre une mémoire dite de trame pour dissocier les opérations de lecture et d'intégration et pouvoir réaliser ces opérations de façon simultanée. Dans ce cas, on associe à chaque condensateur d'intégration un autre condensateur pour la lecture. Il est possible ainsi d'obtenir un temps de lecture de l'ordre de grandeur du temps d'intégration.

De façon avantageuse, le nombre de détecteurs de chaque sous-ensemble de détecteurs, c'est-à-dire le nombre de détecteurs associés à un même condensateur d'intégration, peut être choisi égal pour tous les sous-ensembles de détecteurs. Ce nombre de détecteurs est, par exemple, compris entre 3 et 9, et de préférence égal à 4. Il est choisi en fonction du temps image, du temps d'intégration et des règles de dessins.

Selon un autre aspect de l'invention, les détecteurs de chaque sous-ensemble de détecteurs peuvent être regroupés sur la mosaïque de détecteurs. On considère que les détecteurs sont regroupés lorsque la juxtaposition de leur surfaces sensibles forme une surface compacte dont les dimensions sont les plus réduites. Une telle surface est triangulaire, carrée ou hexagonale, par exemple.

Cette caractéristique n'est certes pas indispensable mais elle facilite la connexion et la commande des circuits de lecture par rapport à une disposition dans laquelle les détecteurs d'un sous-ensemble de détecteurs seraient séparés et dispersés sur la mosaïque de détecteurs.

Selon une réalisation particulière du dispositif de l'invention, dans laquelle chaque sous-ensemble de détecteurs comporte quatre détecteurs, les moyens pour commander les interrupteurs sont aptes à commander les interrupteurs de chaque sous-ensemble de détecteurs selon un ordre identique alternant la fermeture d'interrupteurs de rang pair et d'interrupteurs de rang impair et chaque détecteur de la mosaïque de détecteurs relié à un interrupteur de rang pair (respectivement impair) est entouré de détecteurs plus proches voisins reliés à un interrupteur de rang impair (respectivement pair).

Selon un autre aspect de l'invention, les circuits de lecture du dispositif de lecture, reliés respectivement à un condensateur d'intégration, peuvent comporter les moyens de polarisation pour polariser successivement chaque détecteur d'un sous-ensemble de détecteurs, relié au condensateur d'intégration par fermeture de l'interrupteur commandable correspondant.

Cette caractéristique est très avantageuse. Elle permet non seulement d'éviter la collecte simultanée du signal de détection de détecteurs plus proches voisins mais exclut aussi, par la même occasion, la polarisation simultanée des détecteurs plus proches voisins. Cette mesure contribue à l'élimination du phénomène de "diaphotie" déjà évoqué et facilite l'augmentation la taille de la surface sensible du détecteur relié au condensateur d'intégration.

A cet effet, selon un autre aspect de l'invention, lorsque les détecteurs sont des détecteurs quantiques, les moyens de polarisation peuvent être prévus pour appliquer sur les détecteurs une tension de polarisation ajustable pour faire varier la taille et la surface de la zone de détection. Les détecteurs quantiques sont, par exemple, des détecteurs tels que des diodes ou des photoconducteurs, dans lesquels un électron est associé à chaque photon détecté.

Pour des détecteurs de type PN, par exemple, une polarisation inverse plus importante conduit à un accroissement d'une zone de charge d'espace à la jonction PN et augmente la surface de détection du détecteur.

La présente invention concerne également un système de détection comprenant une mosaïque de détecteurs et un dispositif de détection tel que décrit ci-dessus.

La mosaïque de détecteurs et le dispositif de lecture peuvent être conçus en un ensemble monolithique. Selon une variante cependant, des supports séparés peuvent être prévus pour les détecteurs et le dispositif de lecture. Ces supports sont alors hybridés, par exemple par des billes de soudure, pour former le système de détection.

D'autres caractéristiques et avantages de l'invention ressortiront mieux de la description qui suit, en référence aux dessins annexés, donnée à titre purement illustratif et non limitatif.

### Brève description des figures

- La figure 1, déjà décrite est une vue schématique partielle d'un dispositif de lecture d'un type connu,
- les figures 2 et 3, déjà décrites, sont des schémas de câblage pour la réalisation de circuits de lecture à injection directe, d'un type connu, pour le dispositif de la figure 1,
- les figures 4 et 5, déjà décrites, sont des schémas de câblage pour la réalisation de circuits de lecture à suiveur de tension d'un type connu, pour le dispositif de la figure 1,
- la figure 6, déjà décrite, est un schéma de câblage pour la réalisation d'un circuit de lecture à amplificateur opérationnel, d'un type connu, pour le dispositif de la figure 1,
- la figure 7 est une vue schématique partielle en plan d'un dispositif de lecture conforme à l'invention,
- la figure 8 est une vue schématique partielle en plan de la surface de détection d'une mosaïque de détecteurs associée au circuit de lecture de la figure 7,
- la figure 9 est une vue schématique simplifiée illustrant un système de détection conforme à l'invention.

### Description détaillée de modes de réalisation

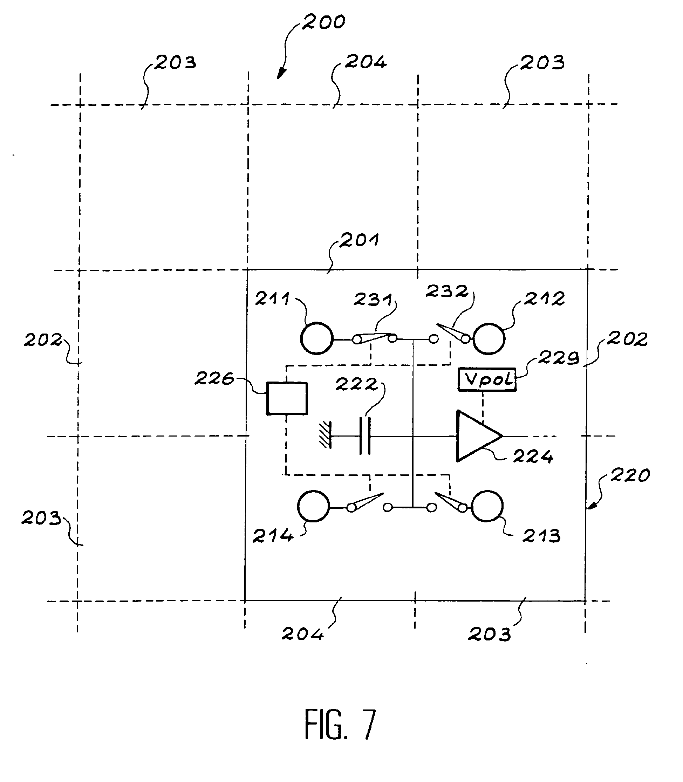

La figure 7 représente très schématiquement et de façon partielle un substrat 200 d'un dispositif de lecture dans lequel un ensemble de régions repérées par les références 201, 202, 203, 204 sont agencées selon un pas correspondant à celui des détecteurs d'une mosaïque de détecteurs. Le pas est considéré comme la distance séparant selon une direction donnée le milieu d'une région au milieu d'une région plus proche voisine. Chaque région est respectivement associée à un détecteur individuel de la mosaïque de détecteurs. Une partie de circuit de lecture de chaque région est respectivement reliée au détecteur correspondant par l'intermédiaire d'un plot de connexion.

Les références 211, 212, 213, 214 désignent respectivement les plots de connexion des régions 201, 202, 203, 204.

Dans l'exemple de la figure 7, les régions 201, 202, 203, 204 sont juxtaposées et de forme carrée. Elles sont associées à des détecteurs également carrés et disposés de façon similaire. Les régions 201, 202, 203, 204 sont respectivement regroupées en des sous-ensembles de régions tous identiques.

La référence 220 désigne un des sous-ensembles de régions du substrat.

Chaque sous-ensemble de régions comporte un condensateur d'intégration 222. Une première borne du condensateur 222 est reliée à la masse. Une deuxième borne du condensateur est reliée d'une part à chacun des plots de connexion 211, 212, 213, 214 respectivement par l'intermédiaire d'interrupteurs commandables 231, 232, 233, 234, et d'autre part à un circuit multiplexeur, non représenté, par l'intermédiaire d'un amplificateur 224 ou par l'intermédiaire d'un interrupteur si l'amplificateur est déporté. Les interrupteurs sont par exemple des transistors à effet de champ fonctionnant en régime de commutation. Le condensateur d'intégration 222 est par conséquent commun à quatre détecteurs de la mosaïque de détecteurs.

Des moyens de commande 226 sont prévus pour fermer successivement dans un ordre séquentiel les interrupteurs 231, 232, 233, 234 de façon qu'à un instant donné au plus un seul interrupteur du sous-ensemble de régions 220 ne soit fermé. Les moyens de commande 226 peuvent être équipés d'une unité de calcul programmée ou comporter un circuit du type registre à décalage. Les moyens 226 peuvent être intégrés dans les régions du substrat comprenant les circuits de lecture ou être déportés.

De cette façon, les plots 211, 212, 213, 214 et les détecteurs correspondants sont successivement reliés au condensateur d'intégration.

Le circuit de lecture du sous-ensemble de régions 220 comporte également des moyens de polarisation 229 pour polariser respectivement le détecteur qui est relié au circuit lorsque l'interrupteur correspondant est fermé. Les moyens de polarisation, aptes à appliquer une tension de polarisation ajustable Vₚₒₗ, sont sommairement représentés avec la référence 229. De même que les moyens de commande 226, les moyens de polarisation 229 peuvent être intégrés sur le site des circuits de lecture ou être déportés.

Le circuit de lecture d'un sous-ensemble de régions tel que représenté à la figure 7 peut être remplacé par un circuit fonctionnant selon le principe de l'un des circuits de lecture des figures 2 à 5, à l'exception du fait que les détecteurs ne sont pas reliés en permanence à ce circuit, mais successivement par les interrupteurs 231, 232, 233, 234.

Il convient de préciser que le substrat comporte une pluralité de sous-ensembles de régions à circuit de lecture commun semblables au sous-ensemble 220.

Dans l'exemple de la figure 7, chaque sous-ensemble de régions comporte quatre régions 201, 202, 203, 204. Chaque sous-ensemble de régions comporte un condensateur d'intégration et des interrupteurs commandables reliés aux moyens de commande 226. Ces moyens 226 peuvent effectivement être communs à l'ensemble des interrupteurs du dispositif de lecture.

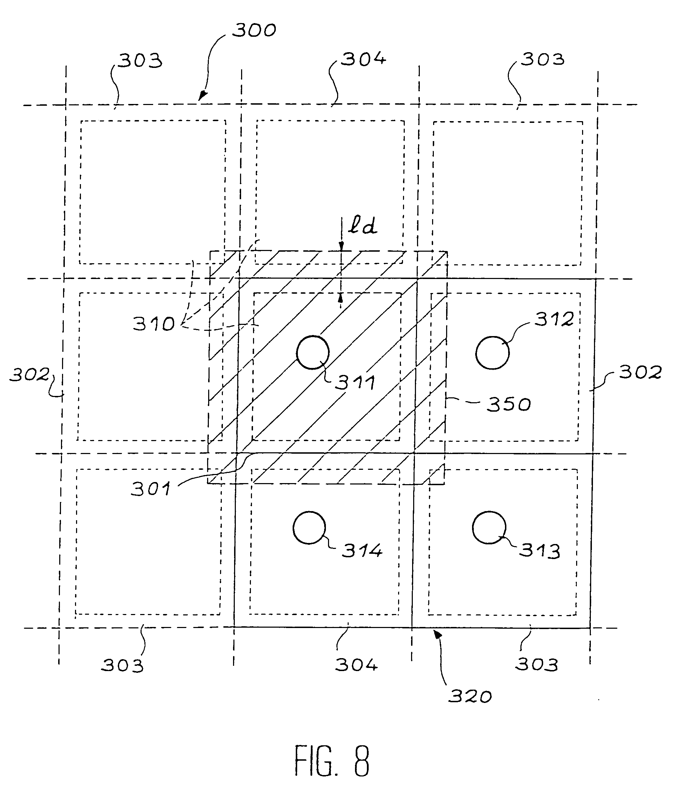

Le fonctionnement du dispositif de lecture de la figure 7 est mieux compris en conjonction avec la figure 8 qui représente schématiquement et en partie la surface de détection de la mosaïque de détecteurs associée au dispositif de lecture.

La mosaïque 300 de détecteurs est par exemple une plaquette de semi-conducteurs dans laquelle sont formés des détecteurs juxtaposés dont la limite physique théorique est représentée sur la figure par des carrés 301, 302, 303, 304. Ces références désignent dans la suite du texte également le détecteur correspondant.

La plaquette de semi-conducteurs est par exemple de type N et des régions 310 de type P, dont la limite est représentée en trait discontinu sont implantées dans ce substrat pour créer des jonctions formant les détecteurs.

Sur la mosaïque 300 sont définis une pluralité de sous-ensembles de détecteurs identiques, dont un seul, désigné par la référence 320 et représenté en trait continu, est complètement visible.

Le sous-ensemble de détecteurs 320 est de forme carrée et est composé de quatre détecteurs à surface sensible carrée juxtaposés. Ces détecteurs 301, 302, 303, 304 comportent chacun un plot de connexion respectivement 311, 312, 313 et 314, relié individuellement aux régions de type P des détecteurs. Une prise de contact commune à tous les détecteurs, non représentée, est formée sur le substrat de type N. Pour des raisons de simplification, les plots de connexion des détecteurs autres que ceux du sous-ensemble de détecteurs 320, ne sont pas représentés sur la figure.

Les plots de connexion 311, 312, 313, 314 des détecteurs 301, 302, 303, 304 sont respectivement connectés aux plots de connexion 211, 212, 213, 314 du dispositif de lecture de la figure 7.

L'interrupteur 231 de la figure 7 étant fermé, et les interrupteurs 232, 233 et 234 étant ouverts, seul le détecteur 301 du sous-ensemble de détecteurs 320 est polarisé et relié au condensateur d'intégration 222 associé au sous-ensemble de détecteurs.

Ainsi, comme le montre la figure 8, seul le détecteur 301 du sous-ensemble de détecteurs 320 présente une surface active de détection lorsque le détecteur est une diode. Cette surface active, indiquée avec la référence 350, correspond à la zone de charge d'espace de la diode de détection, qui dépend essentiellement de la tension de polarisation appliquée au détecteur, et à une zone définie par la longueur de diffusion, notée ld, qui dépend essentiellement du dopage des semi-conducteurs formant la diode.

Dans le cas où le détecteur est une diode ou un photoconducteur, en ajustant la tension de polarisation appliquée au détecteur, c'est-à-dire en modifiant la tension de polarisation Vpol des moyens de polarisation 229, il est possible d'augmenter ou de réduire la surface active du détecteur, c'est-à-dire faire varier l'extension de la zone de détection. Toutefois, la taille de cette surface dépend essentiellement de la taille des régions P 310 implantées.

Comme le montre la figure 8, la surface active présente des dimensions supérieures à celles des détecteurs et "déborde" sur les détecteurs voisins. Ceci permet un sur-échantillonnage de l'image formée.

Toutefois, comme les détecteurs plus proches voisins du détecteur 301, c'est-à-dire les détecteurs 302 et 304 ne sont ni polarisés ni reliés au circuit de lecture, le phénomène de diaphotie est évité.

Dans une réalisation particulière de la mosaïque et du dispositif de lecture, l'intégration et la lecture se font selon la séquence donnée par le tableau I ci-dessous.

**TABLEAU I**

| **ORDRE DE SEQUENCE** | **OPERATION** | **INTERRUPTEURS** | | | |
|---|---|---|---|---|---|
| | | **231** | **232** | **233** | **234** |
| 1 | intégration détecteur 301 | F | 0 | 0 | 0 |
| | lecture détecteur 301 | 0 | 0 | 0 | 0 |
| 2 | intégration détecteur 302 | 0 | F | 0 | 0 |
| | lecture détecteur 302 | 0 | 0 | 0 | 0 |
| 3 | intégration détecteur 303 | 0 | 0 | F | 0 |
| | lecture détecteur 303 | 0 | 0 | 0 | 0 |
| 4 | intégration détecteur 304 | 0 | 0 | 0 | F |
| | lecture détecteur 304 | 0 | 0 | 0 | 0 |

Dans le tableau I, les lettres O et F désignent respectivement un interrupteur fermé et un interrupteur ouvert.

Dans cette réalisation particulière les détecteurs de chaque sous-ensemble de détecteurs sont reliés selon la même séquence au condensateur d'intégration du sous-ensemble de régions du dispositif de lecture, qui est associé au sous-ensemble de détecteurs dont ils font partie.

Ainsi, sur la mosaïque 300 un certain nombre de détecteurs faisant tous partie de différents sous-ensembles de détecteurs sont actifs à l'ordre de séquence 1, d'autres à l'ordre 2, etc.

A titre d'exemple, sur la figure 8, tous les détecteurs 302 sont actifs simultanément, tous les détecteurs 303 sont actifs simultanément, ainsi que les détecteurs référencés 301 et 304, à tour de rôle.

Lorsque l'ordre des séquences est ainsi établi, un détecteur donné d'un sous-ensemble de détecteurs donné est entouré de détecteurs plus proches voisins du même sous-ensemble de détecteurs ou d'un autre sous-ensemble de détecteurs, mais qui ont un ordre d'activation différent dans la séquence.

A titre d'exemple le détecteur 301 activé à l'ordre 1 (impair) de la séquence est entouré de deux détecteurs 304 et de deux détecteurs 302, plus proches voisins, activés respectivement aux ordres (pairs) 2 et 4 de la séquence du tableau I.

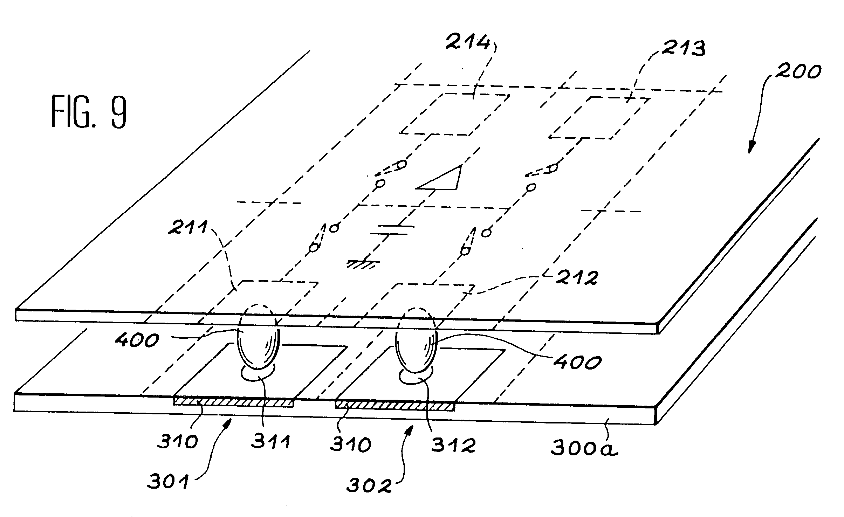

La figure 9 est une représentation très schématique d'un système de détection de rayonnement à structure hybride. Des éléments de cette figure identiques ou similaires à ceux des figures 7 ou 8 portent les mêmes références afin de pouvoir se reporter aux explications qui précèdent.

Le système de la figure 9 comprend un premier substrat 300a en un matériau semi-conducteur d'un premier type de conductivité, par exemple, de type N dans lequel sont formés une pluralité de détecteurs 301, 302 par implantation de régions 310 d'un deuxième type de conductivité, par exemple, de type P.

Un deuxième substrat 200 comporte un dispositif de lecture conforme à la figure 7. A titre de simplification, un seul circuit de lecture relié à des plots de connexion 211, 212, 213, 214 est représenté. Ce circuit de lecture correspond à un sous-ensemble de détecteurs dont font partie les détecteurs 301 et 302 visibles sur la figure.

Des plots de connexion 311 et 312 des détecteurs 301, 302 du premier substrat 300a sont reliés aux plots de connexion 211 et 212 du deuxième substrat par des billes de matériau fusible 400.

D'autres billes de matériau fusible, non représentées, relient de la même façon chaque détecteur du substrat 300a respectivement à un circuit de lecture associé au sous-ensemble de détecteurs dont il fait partie.

### DOCUMENT CITES DANS LA PRESENTE DEMANDE

### (1)

"Sampling effects in CdHgTe focal plane arrays" de D.J. Bradley et al., SPIE, vol 590 Infrared Technology and Applications (1985), pages 53-60.

### (2)

"Sampling effects in CdHgTe focal plane arrays practical results" de R.J. Dam et al., SPIE, vol 685 Infrared Technology, XII(1986), pages 123-128.

## Revendications

1. Dispositif de lecture pour un ensemble de détecteurs de rayonnement (301, 302, 303, 304) agencés en une mosaïque de détecteurs (300), et comprenant une pluralité de condensateurs (222), dits condensateurs d'intégration, reliés chacun à un circuit de lecture (224, 229), dans lequel chaque condensateur d'intégration (222) est respectivement associé à un sous-ensemble (320) de plusieurs détecteurs de la mosaïque, le dispositif de lecture comprenant en outre une pluralité d'interrupteurs commandables (231, 232, 233, 234) pour relier successivement chaque détecteur (301, 302, 303, 304) de chaque sous-ensemble de détecteurs (320) respectivement au condensateur d'intégration (222) associé audit sous-ensemble de détecteurs afin de collecter un signal de détection dudit détecteur, et le dispositif de lecture comprenant des moyens (226) pour commander la fermeture, et l'ouverture, des interrupteurs associés à chaque sous-ensemble de détecteurs selon un ordre séquentiel, **caractérisé en ce que** l'ordre séquentiel exclut l'intégration simultanée et la lecture simultanée du signal de détection de détecteurs plus proches voisins de la mosaïque de détecteurs.

2. Dispositif selon la revendication 1, **caractérisé en ce que** chaque sous-ensemble de détecteurs (320) comporte un nombre identique de détecteurs.

3. Dispositif selon la revendication 2, **caractérisé en ce que** chaque sous-ensemble de détecteurs (320) comporte un nombre de détecteurs compris entre 3 et 9.

4. Dispositif selon la revendications 1, **caractérisé en ce que** les détecteurs (301, 302, 303, 304) de chaque sous-ensemble de détecteurs (320) sont regroupés sur la mosaïque de détecteurs.

5. Dispositif selon la revendication 4, **caractérisé en ce que** chaque sous-ensemble de détecteurs (320) comporte quatre détecteurs avec une surface active de forme carrée, et disposés de façon adjacente pour former un carré de détecteurs.

6. Dispositif selon la revendication 1, **caractérisé en ce que** chaque circuit de lecture relié respectivement à un condensateur (222) d'intégration comporte des moyens de polarisation (229) pour polariser successivement chaque détecteur d'un sous-ensemble de détecteurs relié au condensateur d'intégration par fermeture d'un interrupteur commandable correspondant.

7. Dispositif selon la revendication 1, **caractérisé en ce que** les détecteurs (301, 302, 303, 304) sont des détecteurs quantiques et **en ce que** les moyens de polarisation (229) sont aptes à appliquer sur les détecteurs (301, 302, 303, 304) une tension de polarisation ajustable pour faire varier l'extension d'une zone de détection de chaque détecteur.

8. Système de détection de rayonnement, **caractérisé en ce qu'**il comporte une mosaïque de détecteurs et un dispositif de lecture conforme à l'une quelconque des revendications précédentes.

9. Système de détection selon la revendication 8, **caractérisé en ce qu'**il comporte un premier substrat (300a) sur lequel sont disposés les détecteurs de la mosaïque de détecteurs, et un deuxième substrat (200) comprenant le dispositif de lecture, les premier et deuxième substrats étant reliés par des billes de matériau fusible (400) en un système hybride.

10. Système de détection selon la revendication 8, **caractérisé en ce que** le dispositif de lecture et la mosaïque de détecteurs (300) forment un ensemble monolithique.

## Claims

1. Reading device for a radiation detector array (301, 302, 303, 304) arranged as a detector mosaic (300) and having a plurality of capacitors (222), known as integrating capacitors, each connected to a reading circuit (224, 229), wherein each integrating capacitor (222) is respectively associated with a subarray (320) of several detectors of the mosaic, the reading device also comprising a plurality of controllable switches (231, 232, 233, 234) for successively connecting each detector (301, 302, 303, 304) of each detector subarray (320) respectively to the integrating capacitor (222) associated with said detector subarray in order to collect a detection signal of said detector, the reading device comprising means (226) for controlling the closing and opening of the switches associated with each detector subarray in accordance with a sequential order, **characterized in that** the sequential array excludes the simultaneous integration and simultaneous reading of the detection signal of closest neighbouring detectors of the detector mosaic.

2. Device according to claim 1, **characterized in that** detector subarray (320) comprises an identical number of detectors.

3. Device according to claim 2, **characterized in that** each detector subarray (320) comprises a number of detectors between 3 and 9.

4. Device according to claim 1, **characterized in that** the detectors (301, 302, 303, 304) of each detector subarray (320) are grouped on the detector mosaic.

5. Device according to claim 4, **characterized in that** each detector subarray (320) comprises four detectors with a square active surface and arranged adjacently to form a detector square.

6. Device according to claim 1, **characterized in that** each reading circuit respectively connected to an integrating capacitor (222) comprises biasing means (229) for successively biasing each detector of a detector subarray connected to the integrating capacitor by closing a corresponding controllable switch.

7. Device according to claim 1, **characterized in that** the detectors (301, 302, 303, 304) are quantum detectors and that the biasing means (229) are able to apply to the detectors (301, 302, 303, 304) an adjustable bias voltage in order to vary the extension of a detection area of each detector.

8. Radiation detection system, **characterized in that** it comprises a detector array and a reading device according to claim 1.

9. Detection system according to claim 8, **characterizing in that** it comprises a first substrate (300a) on which are placed the detectors of the detector array and a second substrate (200) comprising the reading device, the first and second substrates being connected to form a hybrid system by fusible material beads (400).

10. Detection system according to claim 8, **characterized in that** the reading device and the detector mosaic (300) form a monolithic assembly.

## Patentansprüche

1. Lesevorrichtung für eine Anordnung von Strahlungsdetektoren (301, 302, 303, 304), die als ein Detektorenmosaik (300) angeordnet sind, mit einer Mehrzahl so genannter Integrationskondensatoren (222), wovon jeder mit einer Leseschaltung (224, 229) verbunden ist, wobei jeder Integrationskondensator (222) jeweils mit einer Unteranordnung (320) von mehreren Detektoren des Mosaiks verbunden ist und die Lesevorrichtung außerdem eine Mehrzahl steuerbarer Schalter (231, 232, 233, 234) zum aufeinanderfolgenden Verbinden jedes Detektors (301, 302, 303, 304) jeder Unteranordnung (320) von Detektoren jeweils mit dem Integrationskondensator (222) umfasst, der mit dieser Unteranordnung von Detektoren zum Sammeln eines Detektionssignal des Detektors verbunden ist, wobei die Lesevorrichtung Mittel (226) zum Steuern des Schließens und Öffnens der mit jeder Unteranordnung von Detektoren verbundenen Schalter einer sequentiellen Reihenfolge entsprechend umfasst, **dadurch gekennzeichnet, dass** die sequentielle Reihenfolge die simultane Integration und das simultane Lesen des Detektionssignals am nächsten gelegener Nachbardetektoren des Detektorenmosaiks ausschließt.

2. Vorrichtung gemäß Anspruch 1, **dadurch gekennzeichnet, dass** jede Unteranordnung (320) von Detektoren eine identische Anzahl Detektoren aufweist.

3. Vorrichtung gemäß Anspruch 2, **dadurch gekennzeichnet, dass** jede Unteranordnung (320) von Detektoren eine Anzahl von 3 bis 9 Detektoren aufweist.

4. Vorrichtung gemäß Anspruch 1, **dadurch gekennzeichnet, dass** die Detektoren (301, 302, 303, 304) jeder Unteranordnung (320) von Detektoren auf dem Detektorenmosaik zusammengefasst sind.

5. Vorrichtung gemäß Anspruch 4, **dadurch gekennzeichnet, dass** jede Unteranordnung (320) von Detektoren vier Detektoren mit einer aktiven Fläche von quadratischer Form aufweist, die zum Bilden eines Detektorenquadrats nebeneinander angeordnet sind.

6. Vorrichtung gemäß Anspruch 1, **dadurch gekennzeichnet, dass** jede jeweils mit einem Integrationskondensator (222) verbundene Leseschaltung Polarisationsmittel (229) zum aufeinanderfolgenden Polarisieren jedes Detektors einer Unteranordnung von Detektoren aufweist, der mit dem Integrationskondensator durch Schließen eines entsprechenden steuerbaren Schalters verbunden wird.

7. Vorrichtung gemäß Anspruch 1, **dadurch gekennzeichnet, dass** die Detektoren (301, 302, 303, 304) Quantendetektoren sind und **dadurch**, dass die Polarisationsmittel (229) an die Detektoren (301, 302, 303, 304) eine einstellbare Polarisationsspannung anlegen können, um die Ausdehnung der Detektionszone jedes Detektors zu verändern.

8. Strahlungsdetektionssystem, **dadurch gekennzeichnet, dass** es ein Detektorenmosaik und eine Lesevorrichtung gemäß einem der vorangehenden Ansprüche aufweist.

9. Detektionssystem gemäß Anspruch 8, **dadurch gekennzeichnet, dass** es ein erstes Substrat (300a), auf dem die Detektoren des Detektorenmosaiks angeordnet sind, und ein zweites Substrat (200) aufweist, das die Lesevorrichtung umfasst, wobei das erste und zweite Substrat durch Kugeln (400) aus schmelzbarem Material in einem Hybridsystem verbunden sind.

10. Detektionssystem gemäß Anspruch 8, **dadurch gekennzeichnet, dass** die Lesevorrichtung und das Detektorenmosaik (300) eine monolithische Anordnung bilden.
